# EUROPEAN PATENT APPLICATION

(11) **EP 2 922 000 A1**
(43) Date of publication of application: **23.09.2015**
(21) Application number: 15155724.6
(22) Date of filing: 19.02.2015
(51) Int. Cl.: G06Q 10/00, G06Q 10/08, G06Q 40/08, G06Q 30/02

(54) **Systems and methods for facilitating the return of lost items to owners**

(30) Priority: 21.03.2014 US 201414221363; 21.11.2014 US 201414550513
(71) Applicant: Stenstrom, Christian, Miami, FL 33149 (US); Candillier, John, London SW18 3RQ (GB)
(72) Inventor: Stenstrom, Christian, Miami, FL 33149 (US); Candillier, John, London SW18 3RQ (GB)
(74) Representative: Albiger, Jonas

(57) **Abstract**

Disclosed herein are systems and methods for having lost items returned to their Owners. The system includes a tag, having an identification code affixed to the items. When a lost item is found, the Finder can access the system by following instructions provided on the tag. The system then conducts a chat session in order to permit the return of the item to the Owner. Once the item has been returned, the Finder can be provided with a reward.

## Description

The present application claims priority from U.S. Pat. Appl. Serial No. 14/221,363, filed March 21. 2014 and U.S. Pat. Appl. Serial No. 15/550,513, filed November 21, 2014, each of which is herein incorporated by reference in its entirety.

The present disclosure relates to systems and methods for providing lost items with visual or other indicia such that a Finder of the lost item can return the lost item to its Owner.

One of the most widely misplaced items in our society today are keys, most often on a keyring. The keyring can contain multiple keys to our home, vehicle and other important locations that we wish to secure. In order to maintain the security of those locations, most Owners choose not to associate personal identification with those keyrings. While this may maintain the security, it also makes almost impossible to return those keys to the Owner should they be lost. While this is particularly true of keys, it is also related to a wide variety of lost items. In addition to keys, many other types of valuable items are being lost every day by Owners. Such items include tools, jewelry, books, and sunglasses. Moreover, as mobile telephones, tablet computers and laptop computers are becoming more ingrained in our lives, such computing systems often contain vast amounts of personal data, and even the temporary loss of such devices can put our personal information in jeopardy.

One solution to this problem has been a keytag that gives the Finder instructions to drop the, e.g., keys into any mailbox and postage will be paid to the Owner. While this system is simple for the Finder and the Owner, the drawbacks make this type of system impractical. Therein, the keys are mailed to a central location, and only after being processed at the central location, are the keys then sent to the Owner. This process relies upon the speed of the postal service and can often take upwards of two to three weeks. In the meantime the Owner does not know if the keys have been found, and by the time the keys arrive, the Owner has most likely, already changed the locks, at a significant cost.

Other solutions utilize modern electronic communication systems to speed the return of the keys to the Owner. In one system, the Owner registers a unique code with his email address, cellular telephone number (for communication via SMS), or other third party communication system, e.g., a universally available instant messaging service. The keyring is provided with a tag including the unique code and an internet website address. When the Finder follows the instructions and provides the code to the website, a message is sent to the Owner by email or SMS that the keys have been found. The Finder and the Owner can then communicate via email or SMS to decide how the keys are to be returned. However, this type of system provides both the Owner and the Finder with personal information of the other.

Other systems attempt to anonymize the communications by providing "dummy" forwarding addresses. For example, when a Finder reports that he has found a keyring, the system can generate an email address such that when the Owner receives the communication, he only sees the system generated email address, not the true address of the Finder. Similarly, the system can have an anonymous address assigned to the Owner. As a result, the system is configured to forward messages sent to the anonymous addresses to the correct user.

However, these systems are fraught with security problems. For example, since a set of keys are often very valuable to the Owner, but most often virtually worthless to the Finder, a Finder can utilize this disparity to abuse the system to extract a ransom from the Owner. Because such conventional systems are conducted using insecure public systems, e.g., email or SMS, or are conducted over uncurated third party networks, such abuses cannot be avoided.

Finally, these systems do not have any method of recording that the keys/items have been successfully retuned to the Owner.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In order to overcome the deficiencies of conventional methods and systems for returning lost or misplaced items to a user, the present invention utilizes a tag for placing on or integrating into a an item, such as a keyring (or other item), which tag includes (1) a unique code associated with the item (hereinafter the "Item Code" or "IC") and (2) a instructions for accessing a web-based portal the website (which can be a URL for a website or a proprietary application installed on a computing device) of the service, which code is assigned to a particular Owner. When a Finder finds the item with the attached keytag, he can access the website to enter the code. Once the code is accepted, the system initiates and conducts a two-way "chat" service between the Finder and the Owner. Rather than relying upon third party systems which may be insecure and unreliable, such as emails (which may be transmitted through one or more SMTP or other servers), SMS messages (which are inherently insecure) or universally available instant message clients/services, by conducting the communication solely through the system, the security can be maintained.

The IC on the tag is a visually perceptible indicia uniquely assigned to the item and to the Owner. In an embodiment, the IC is simply a multi-digit numeric or alphanumeric string of characters, at least 15-20 characters in length. This allows for a very large number of unique items to utilize the system without repetition. In one embodiment, one or more characters serves as a "check digit" (as is conventionally known) to ensure correct input of the code by a Finder, as not every combination of characters would be assigned to an item. This also helps to prevent the system from misidentifying an Owner, based on an incorrect input by a Finder. Although many embodiments will have a lengthy series of digits/characters in the IC, it is considered within the scope of the invention to utilize a much smaller or larger number, such as, as few as five, or even as many as 30.

Moreover, because the users are communicating through the system, the entire communication can be monitored for abuse. In fact, according to one embodiment of the invention, the system keeps track of every chat communication to prevent and/or monitor abusive behavior, further protecting the parties involved. Each message sent by either the Owner or the Finder can be stored and reviewed to make sure that each user is actually working to ensure the return of the lost item to the Owner in an expeditious manner. Should a user act in a threatening manner or hindering the timely return of the lost item to the Owner, the system can alert the system operator for further action. Such actions can be monitored by tracking particular words or phrases input by the users either manually by a system administrator or be scanned for automatic detection of such words or phrases and notification to a system administrator for further action.

In a typical operation of the invention, a Finder locates a lost item, accesses the website via the provided URL and enters the code printed on the tag attached to the item. The system searches its database for the code and identifies the Owner. Without providing any personal information about each user to the other, the system sends an email message to each, inviting them both to participate in a chat session provided by the system. Through their messages, the Finder and the Owner can type back and forth in real time of when convenient to decide when, where and how the item is to be retrieved.

In another typical operation of the system of the invention, the Owner reports the loss of the item. In order to simplify this reporting, the Owner is asked to input his telephone number and his email address in order to verify his identity. The system can then provide the Owner with a confirmation email, inviting the Owner to the same type of chat session. Once the Finder accesses the chat session (by first inputting the IC and his email into the system and accepting the chat invite), the Owner and the Finder are able to communicate.

Although the system can be designed to operate through a computing device, e.g., a conventional browser, either through a desktop or laptop computer or a mobile device, it is considered within the scope of the invention to operate the chat session through an application installed on a mobile device, such as a smartphone, tablet or computer. For example, either before or after registering the IC with the system, the owner can download and install an application (often referred to as an "App") onto his mobile device. When the system communicates with the Owner, a notification can be sent to the Owner that there is a message for him. Such notification can be selected (either by the Owner or assigned by the application) to be one or more of a vibration, an audible signal, a message on the screen of the device and operation of a flash, LED or other light. This way, as soon as a Finder informs the system that an item has been located, the Owner can be alerted very quickly, without having to rely upon email systems.

By operating through an application, rather than through a website, the security and monitoring of the communication session between the Owner and the Finder can be more easily ensured. Furthermore, rather than relying on an inputted code of 15-20 digits/characters, the system can be designed to respond to a scanned or photographed image by, e.g., a smartphone. This image can be the series of digits/characters or even an image that would not obviously be expected to be an IC.

In one embodiment, the system provides a reward to the Finder. This can be in the form of a reward directly to the Finder, in the form of a gift card or other prize which can be provided each time the Finder successfully returns a lost item to an Owner, or enter the Finder into a lottery or drawing which entitles the Finder to a single chance to win a prize each time he successfully return a lost item to an Owner. In an embodiment, the reward is a donation made to a charity each time a Finder successfully returns a lost item to an Owner. For example, when an Owner reports that an item has been returned, the Finder is provided with an automated message alerting the Finder that a donation is being made to a particular charity and including the amount of the donation. Although the Finder is not provided with any direct reward for "doing the right thing", the "altruism" is encouraged by adding to the good feelings he can get by helping the Owner retrieve his lost item.

The foregoing summary, as well as the following detailed description of various embodiments, is better understood when read in conjunction with the appended drawings. For the purposes of illustration, there is shown in the drawings exemplary embodiments; however, the present disclosure is not limited to the specific methods and instrumentalities disclosed. In the drawings:
FIG. 1 shows an embodiment of the invention where a keyring is provided with a tag.
FIG. 2 is a schematic diagram of an embodiment of the invention for assisting an owner with return of his lost item.
FIG. 3 is a typical method of registering an item with the system of the invention.
FIG. 4 is a flow chart of a process in accordance of the invention when a Finder locates a lost item before the Owner reports such to the system.

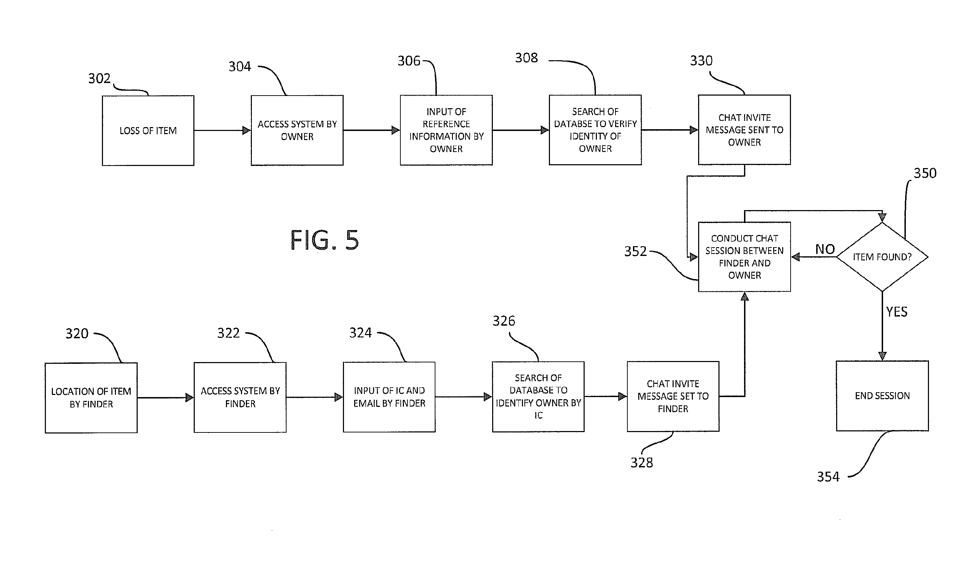

FIG. 5 is a flow chart of a process in accordance with the invention when an Owner reports a lost item before the item is found by a Finder.
FIG. 6 is a flow chart depicting an example procedure for operating the system of the invention.

The present disclosure is described with specificity to meet statutory requirements. However, the description itself is not intended to limit the scope of this patent. Rather, the inventors have contemplated that the claimed subject matter might also be embodied in other ways, to include different steps or elements similar to the ones described in this document, in conjunction with other present or future technologies. Moreover, although the term "step" may be used herein to connote different aspects of methods employed, the term should not be interpreted as implying any particular order among or between various steps herein disclosed unless and except when the order of individual steps is explicitly described. Additionally, the term "Owner" is used throughout the specification and claims to identify the person to whom the particular item is registered according to the system (irrespective of any legal ownership of such items), and the term "Finder" is used to identify the person that locates the item and cooperates with the system to assist in returning the lost item to the Owner. It should be understood that the systems and components disclosed herein may be suitably implemented by hardware, software, firmware, or combinations thereof. For example, the systems and components may be implemented by one or more processors and memory.

The present invention is designed to permit fast, secure and easy return of lost items. While the following is primarily directed to the situation where the lost item is key ring, the invention is not so limited. The invention is equally applicable to any item which can be provided with an Identification Code (IC), including, but not limited to, cellular or other mobile telephones, laptop computers, tools, cases, tablet computers, notebooks, wallets, sunglasses, or any other portable item which may have value (which may be intrinsic, monetary or sentimental) to an owner.

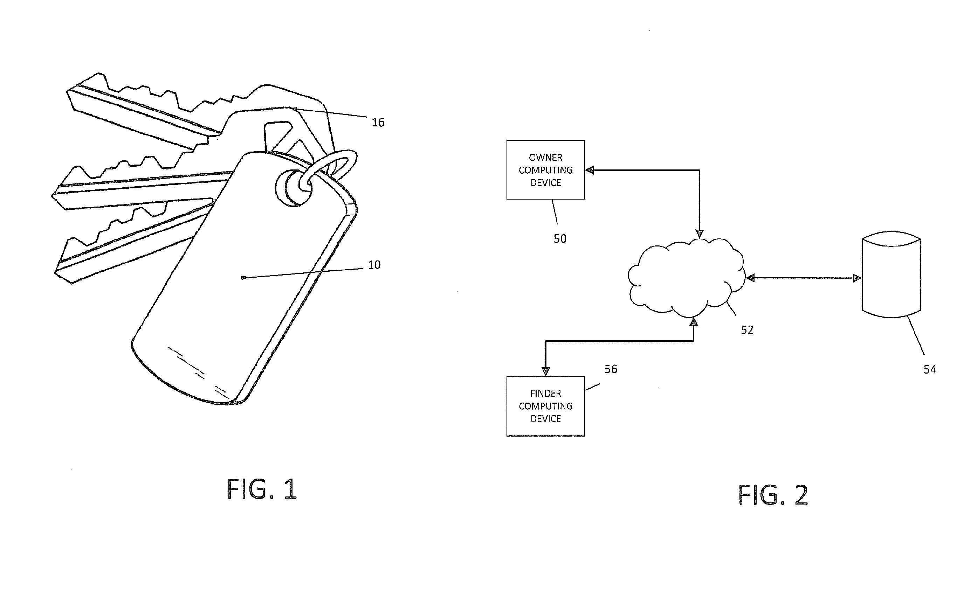

As described herein, in an embodiment of the invention shown in FIG. 1, a keytag 10 is provided and attached to an item, such as a set of keys 16. An identification code and other information can be printed, engraved or otherwise shown on the keytag 10, such that a Finder of the keytag 10 can utilize the information to return the keys 16 to the Owner.

FIG. 2 is a schematic diagram of a system in accordance with the invention. The system includes an Owner computing device 50, which is connected via a network 52 to a server 54, as well as Finder computing device 56. The operation of the disclosed methods may be implemented using system components other than those shown in FIG. 1.

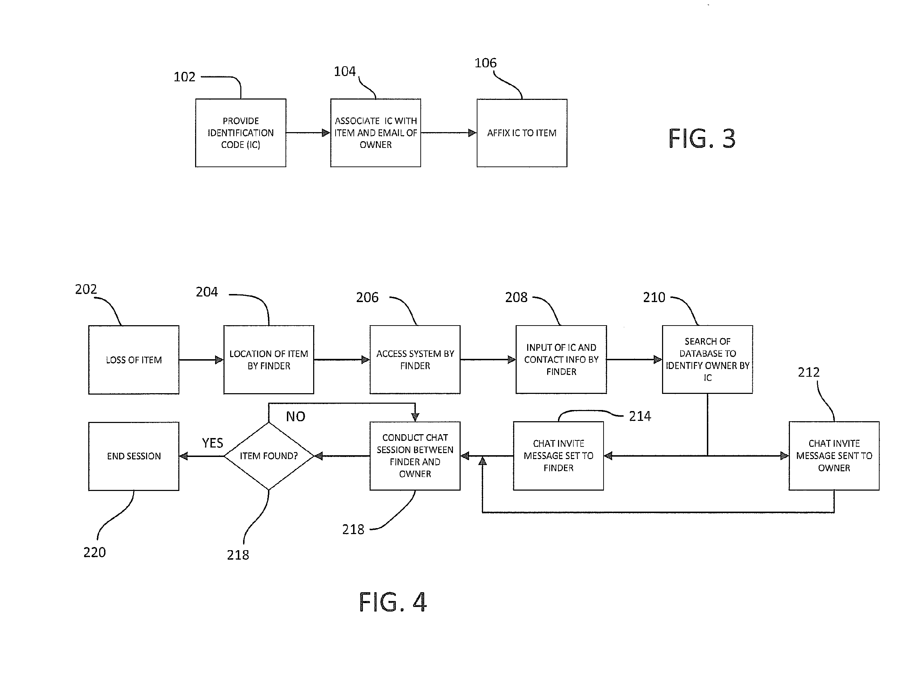

An embodiment is depicted in Fig. 3. In order to register an item with the system, the Owner first receives an Item Code (IC) from the system (Step 102), and associates the IC with the particular item by registering the item with the system (Step 104). As the IC is typically generic, it can be associated with any item desired by the Owner. Once the IC has been registered to the Owner and associated with the item, in Step 106, the IC is affixed to the item. This can be accomplished in a variety of methods, for example, by simply putting an identification tag on a key ring or applying a sticker with the IC on the item. This step is typically completed with the Owner computing device 50 and the information is stored on the server 54.

It is also considered within the scope of the invention to apply the IC directly to the item itself, i.e., not to a tag, sticker or label. In such embodiments, the IC may be permanently affixed to the item, for example, by engraving or etching. By having the IC permanently affixed, as compared to simply applied, it is not possible that the sticker, label or tag can fall off or be removed from the item.

In addition to the IC, the item is typically provided with information on how to access the system by a Finder. In an embodiment, this is a URL which can be accessed by any computing device. The information may also include information relating to, e.g., any rewards which may be given when the item has been found and returned to an Owner or advertising for the system. The IC, along with the access information, is referred to as the indicia.

The IC may be an alphanumeric code consisting of greater than 5, greater than 10, or between 15 and 20, characters which can be read and understood without the need for any electronic device. In one embodiment, the IC consists of a series of 16 numbers, allowing for a total of a billion billions of unique ICs.

Although the IC can appear to be a random series of characters, the IC can contain tracking information giving the system information about, for example, the Owner and/or the item, allowing for tracking Owners/items for statistical and accounting purposes, as well as error detection. Although the inclusion of tracking information necessarily decreases the number of unique ICs available, this can be accounted for by simply having additional digits in the IC. For example, as the system is not limited to any geographic region, the system can utilize a number of characters in the IC to indicate certain geographical regions. In such an embodiment, the first few characters can indicate where the Owner lives, where, for example, 01 can indicate the United States/Canada, 44 can indicate the United Kingdom, 61 can indicate Australia, 33 can indicate France, or any other designated code system. Another digit of the IC can be used to describe the type of item, e.g., one number can indicate keys, and another can indicate a mobile telephone.

Additionally, the IC can contain one or more characters identifying specific sales channels. In this embodiment, a particular retailer of the system can be assigned a series of ICs, such that when the Owner registers the IC with his item, the system can understand through what channel the Owner obtained the IC. This allows for statistical tracking of the number of registrations coming from the different sources. Should the distribution arrangement include an incentive or reward for the retailer, this embodiment permits easy and efficient tracking of the relevant data.

Moreover, it is also within the scope of the invention to allow for one or more check-digits in the IC. The check digit can form of redundancy check used for error detection on the ICs which have been input manually. It is analogous to a binary parity bit used to check for errors in computer-generated data. It can consist of a single digit (sometimes more than one) computed by an algorithm from the other digits (or letters) in the sequence input. With a check digit, one can detect simple errors in the input of a series of characters (usually digits) such as a single mistyped digit or some permutations of two successive digits. The check digit can be one or more characters in the IC calculated by any algorithm which informs any user that the particular IC input contains an error. The use of a check digit can help to eliminate the instance where a user inputs an incorrect IC. The specific algorithm used can be any algorithm and is not relevant to the invention.

The IC may also be provided in the form of a machine readable code (MRC), rather than a string of alphanumeric characters. This can be in the form of a bar code or a quick response code (often called a "QR" code) as are known in the art. In order for a user to interact with such a code, a camera or scanner of a computing device, most often a mobile telephone or PDA, would be used. The MRC could contain instructions to be automatically followed by the computing device, including accessing the system (through, e.g., a mobile browser) and the IC associated with the item. By scanning the MRC, the Finder can quickly and easily initiate the FOUND procedure without having to manually (1) initiate an application on the computing device to access the system and (2) enter the lengthy IC. This can also significantly reduce occurrence of typographical errors when entering the IC, thus eliminating the need for the check digits. In order to increase the versatility and to provide the Finder with a large number of methods of accessing the system, it is within the scope of the invention to provide the IC as both an MRC and a "human-readable code".

The MRC can utilize a Radio Frequency Identification (RFID) tag as known in the art. Many modern mobile telephones contain RFID communication systems which can read electronically stored information embedded in tags. Accordingly, a Finder need only have his computing device read the information in the tag to automatically both access the system and enter the IC.

FIG. 4 describes the method of returning lost item to an Owner when the Finder reports to the system that the item has been found before the Owner reports the loss to the system. At Step 202, an Owner loses or misplaces an item having associated with an IC that has been previously registered with the system. Once a Finder locates the item (Step 204), he accesses the server 54 of system of the invention with the Finder computing device 56 by following instructions provided on or with the item along with contact information (Step 206). Such contact information can be an email address or mobile telephone number (for SMS or MMS messages). Once the Finder provides the system with the IC of the item (Step 208) - either through manual entry or automatic input as described herein - the system searches its database to identify the item and Owner, based upon the IC input by the Finder (Step 210). Once the Owner and his associated email address or other communication method has been identified by the system, a message is sent from the server 54 through the network 52 to the Owner via the Owner computing device 50 alerting him to the fact that someone has reported finding his item (Step 212). Typically, this message is sent via electronic mail, but can be in the form of a text message (SMS), multi-media message (MMS), instant message service or other alert/notification which may be capable of being received on a mobile computing device. This message typically also contains an invitation to participate in a chat session with the Finder. The system also sends a message to the Finder via the contact information, inviting the Finder to join a chat session with the Owner (Step 214). As will be explained in further details below, once both the Owner and Finder join the chat session, the system conducts the chat session (Step 216) through the server 54 until the item is found and returned to the Owner (Step 218). Only when the Owner reports to the system that the item has been returned does the system end the chat session (Step 220).

As described throughout the specification, the chat session of the invention is typically private. A private chat session is one that is conducted solely by the system of the invention via the network(s) and without the use of unsecure communication methods, such as electronic mail, SMS or MMS. In most embodiments, the private chat is conducted through interactions directly with the computing system that maintains the database, through, e.g., a web browser via HTTPS. Although less preferred, a private chat is conducted through a proprietary application stored and operated on one of the Owner's and the Finder's mobile communication device or through encrypted electronic mail messages.

The system of the invention additionally permits the Owner to report the item missing before it is located by a Finder, as shown in FIG. 4. At Step 302, the Owner notes loss of an item registered with the system. He then accesses the server 54 of the system with the Owner computing device 50 to report the loss (Step 304). The system asks the Owner to input information in order to verify his identity and the item (Step 306). This information typically includes the Owner's email address and telephone number, but can be any information registered with the system. Although it would be very useful to use the IC associated with the lost item, as the Owner cannot locate the item, retrieving the IC is usually not practical. In Step 308, the system searches its database on the server 54 to compare the information provided in Step 306 to verify the identity of the Owner and the item. The system then waits for the item to be located by the Finder. In Steps 320-328, the system follows the same procedures as in Steps 202-210 as shown and discussed in connection with FIG. 3, and Steps 350-354 are the same as Steps 214-218.

While Step 218 is conducted solely on the server 54 of the system, allowing for the security and monitoring of the communications, the chat invitation messages, e.g., Steps 212 and 214 can be sent or transmitted to the computing devices 50, 56 via any method, including, but not limited to, email, SMS, MMS, or an instant messaging service. As used through the present specification and claims, an instant messaging service is a third-party communication system maintained and conducted separately from the system of the invention.

After Step 220 and Step 354, depending on which procedure is followed, the Finder is provided with a reward. In an embodiment, the system sends a message to the Finder, which message may be delivered via the same method as in Step 214 or Step 328 or any other method. This message can inform that because of his altruism, the operators are going to make a donation to a cause or charity on behalf of the Finder. The cause or charity can be predetermined by the operator of the system of the invention or the Finder can be provided with a predetermined selection of charity or causes. Either in addition to or in the alternative, the Finder can be provided with a more direct reward, e.g., in the form of a gift card (e.g., an electronic card or credit, rather than a physical card) to an establishment, such as a restaurant, or retail store (for example, Amazon or Walmart), or a credit to be used toward using the system as an Owner. Irrespective of which reward type (if any) is provided, the system can maintain contact information of all Finders and utilize that contact information for future marketing purposes. In one embodiment, the Finder is presented with the opportunity (during Step 208 or Step 324) to opt out of such marketing.

In an embodiment, each record of the database on the server 54 of the system contains a number of fields. A first field would be the IC. A second field would be information identifying the Owner of the item, and a third field would be the status. The identifying information can be, for example, a string of characters identifying the Owner, a user ID, a mobile telephone number, or email address. The status is initially set as "Not Lost", but can be changed to "Lost" or "Found", as described below. The system includes a second database where each record corresponds to an Owner. Fields in this Owner Database can include the string of characters identifying the Owner, a user ID, password, associated ICs, name, email address, telephone number, street address, and/or subscription information.

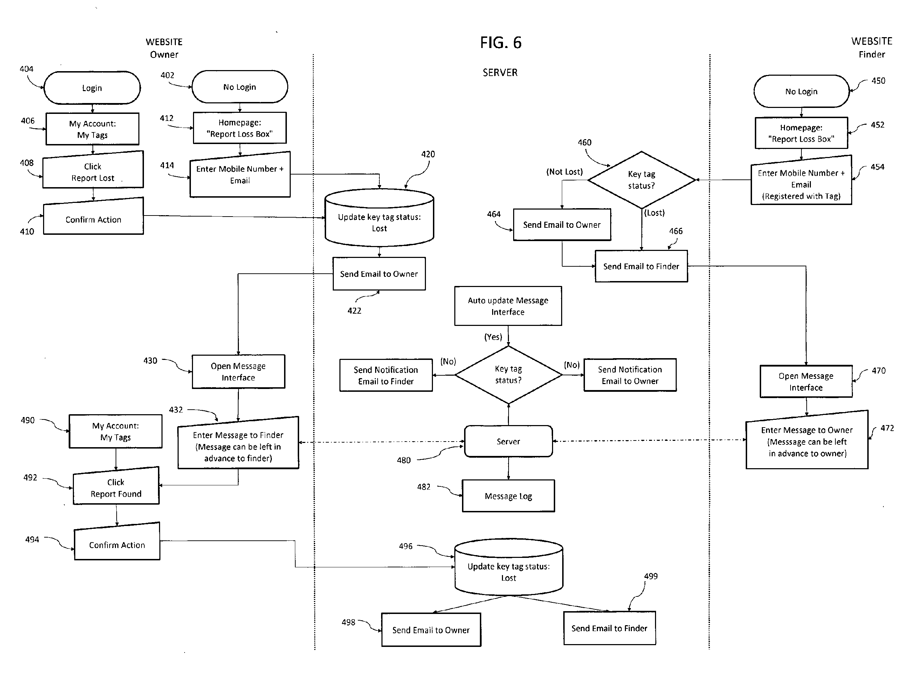

As shown in FIG. 6, the operation of the system of the invention can start when the Owner, through an Owner computing device 50, decides to not login to the system (Step 402) or to log into the system (Step 404) through a web-based portal or website. Should the Owner log in (either by entering login credentials, such as a user ID or his email address, or by having his computing device automatically input his credentials or any other method), the Owner can be presented with a list of his items registered with the system through, e.g., a search of the server 54 and (either with or without their associated ICs) (Step 406). From this list, the Owner can select which item he wishes to report lost (Step 408). In Step 410, the system can provide the Owner with an option of confirming the selection of the particular item and/or the ability to go back to Step 408 to select/identify an alternative or additional item as being lost. At the server, a database of items on the server 54, ICs and their associated Owners and status identifiers is updated to identify the particular item(s), identified in Step 410, as being lost.

The Owner can also report that an item is lost without having to log into the system (Step 402). This may be desired when the Owner is using shared computing device, such as a borrowed mobile phone, laptop computer or public computer (e.g., in a library). This may also be desired when the lost item is the Owner's computing device. By not logging in, his login credentials cannot be stored (even temporarily) on the computing device. In this circumstance, the Owner accesses a portion of the system to report a lost item. This is typically accomplished by visiting the website or web-based portal of the system and entering a sub-system on the server 54 for reporting a loss (Step 412). Thereafter, the system would ask the Owner to enter information, such as his mobile telephone number and/or email address such that the system can search the database to identify the Owner (Step 414). From here, the system can be designed to move to directly to Step 420 (where the status indicator field corresponding to the lost item is changed to "Lost") as shown, or to Step 418 (not shown), where the entered mobile number and email address are searched against the database on the server 54 of registered Owners, and once identified, move to Step 408, as described above. Essentially, the Owner can access the functionality of the system by logging in directly (Step 404) or by entering information relating to his account (Step 402).

Although Step 402 is described and shown as using two pieces of data to identify the Owner, it is considered within the scope of the invention to utilize any number of data points to allow access to the system. For example, once an email address or telephone number is input, the system can proceed directly to Step 420 (or Step 404). Similarly, the system can be configured to utilize a second data element, e.g., PIN or password, once the email address or telephone number is accepted.

Once the field in the database for the item is set to "Lost" in Step 420, a message is typically sent to the Owner computing device 50 via, e.g., email, SMS, instant messaging service or other messaging system, verifying the identification of his item as being lost and identifying the Owner to participate in a chat session by opening a message interface (Step 430). The Owner would then open the message interface and be permitted to leave a message for the Finder, once the item has been identified as being found (Step 432).

In this embodiment, the Finder accesses the system with the Finder computing device 56 without logging in (Step 450). In most embodiments, the Finder would locate the item and be able to read instructions provided on the tag attached to the item, including the web address of the system. He typically accesses the system via a web-based portal and clicks an icon or link to "Report Loss" (Step 452). This link can be the same or different than the button/link in Step 412. In an embodiment, the button/link would be different and would indicate that this particular link/button is used when an item is found, rather than when one is lost. In Step 454, through the Finder computing device 56, the Finder enters the IC associated with the item he has found, along with his own email address (or SMS or other contact information). The system searches its database on the server 54 to identify the correct item and Owner associated with the IC input in Step 454 (Step 460). Once identified, the system checks the record and reads the status field. Either way, the system sends the Owner, through an Owner computing device 50, a message indicating that the item has been found. The content of the message will depend upon the content of the status field. Specifically, if the status field is "Lost", indicating that the Owner has previously reported the item as lost (Step 420), the Owner is notified that someone has found his item (Step 464), and the Finder is notified of the fact that the Owner has been notified that the item has been found (Step 466). Either way, the status field is changed to "Found" (Step 468, not shown), indicating that the item has been located by a Finder. The system then opens a message interface (Step 470), giving the Finder the opportunity to post a message on the server 54 to the Owner that the Owner will receive when he enters the chat session (Step 472).

The server 54 then conducts the chat session (Step 480). Initially, invites are sent to both the Owner and the Finder inviting each to participate in the session. In an embodiment, the chat session is conducted solely through the servers of the service permitting the communications to be secured, curated, reviewed and archived (Step 482). For example, the chat session can be through a secure environment, such as a secured web site (e.g., HTTPS) or proprietary portal, such that each of the Owner and the Finder can participate via any computing device capable of accessing the web site or portal, while being assured that the content of the chat session cannot be easily intercepted. Similar to other communication systems, each of the Owner and Finder are (1) presented with a dialog box into which his communications can be input and (2) a display section showing the communications sent by the other user. This communication system can refresh the display on a set interval (e.g., any interval between 1 and 10 seconds), manually by the particular user, or immediately when the server receives a message from either user. In one embodiment, the chat session (and refreshing of the display) continues until the status field is returned to "Not Lost".

At any time, even before the item has been located by a Finder, the Owner can report that the item has been returned. This can be accomplished by accessing his account via the system and selecting the item previously reported as lost (or its corresponding IC) and clicking or selecting a function corresponding to "Report Found" (Step 492), and confirming to the system that the Owner wishes to report the item as having been found and returned (Step 494). The system can then take this information and update the Status field in the database on the server 54 to "Not Lost" (Step 496), and send a confirmatory message to the Owner (Step 498) and the Finder (Step 499) through their respective computing devices 50, 56.

The system of the invention can also be configured to provide the Finder with a reward. This reward can be in the form of a direct benefit. One example, can be a monetary compensation, in the form of a payment to the Finder, or a credit toward an on-line account, e.g., Amazon, iTunes, and PayPal. The reward can also be in the form of a gift card (e.g., an electronic one, in order to reduce transaction costs including postage), a discount or other promotion from a physical or on-line company or even a cash payment. The type and value of the reward can be decided by the Owner either at the time the IC is registered and associated with the item or at the time the item is first reported as "Lost". Once the Owner reports the item has having been returned, and the system changes the status flag from "Found" to "Not Lost" (indicating that an item has been located by a Finder and successfully returned to the Owner), the Finder can be provided with a communication informing him of the type and value of the reward, as well as how to redeem the reward. Other types of rewards can include a donation made to an organization or charity, where the particular organization or charity is selected by the operators of the system, the Owner or even the Finder. In order to encourage a Finder to report the item as having been found and interact with the system, the tag is printed with a message indicating that a reward is available.

The system of the present invention also permits the communications between the Owner and the Finder to be curated and reviewed to prevent abuse. For example, because contact information is typically required by a Finder to use the system, should abuse of the system occur, the system can take actions, e.g., notify any relevant authorities about the abuse, cease the Finder's access to the specific chat session or the system entirely, or alert a person that further analysis may be required. This can be accomplished by, e.g., the system having a number of keywords or combinations which automatically flags the chat session as being a potential problem.

Because the chat sessions of embodiments disclosed herein are all conducted by a server 54 of the system, it is possible to store the communications for further analysis. For example, certain keywords can be flagged for different purposes. For example, in trying to locate an Owner, a Finder may tell the Owner that the keys were found in a parking lot, restaurant, bathroom, bar, etc. By searching for those particular keywords, and coordinating such with other information, e.g., area code of the Owner and Finder, time of day, etc., different statistical analyses can be run for various purposes. This data can be used to provide Owners with information relating to common places keys are lost, as well as new markets into which the system should be sold.

The invention is also designed to be used with accessory products (or articles) that are used alongside with the specific item. Typical accessory products include, but are not limited to cases which can be decorative and/or protective. Often these cases are provided with an IC which is permanently affixed or applied at the factory, such that when an Owner obtains the accessory product, he simultaneously obtains the IC. As use of the system of the invention is usually fee-based, the purchase of the accessory product may include (1) a pre-paid use of the system, (2) an activated IC which must be paid for by the Owner, or (3) an option to purchase the use of the system at a discounted price. Either way, the Owner is provided with a unique IC that he may then register for his item.

Other embodiments for the accessory product can be ones associated with vehicles (such as cars, motorcycles, and busses), e.g., ignition keys or key fobs. The technology is particularly useful in businesses and industries where vehicles are often driven by different people, such as rental cars, delivery vehicles and other businesses having fleets of vehicles. The IC is often provided directly on the product itself, i.e., prior to receipt by the consumer. In such an embodiment, the IC can be registered by the manufacturer, on behalf of the consumer (Owner). Other accessory products can include pet collars, speakers, instruments, and audio equipment, as well as fashion items, such as luggage, handbags, watches, eye- and sun-glasses (and related cases), and all jewelry.

It is also considered within the scope of the invention to incorporate this technology into the pet microchip systems, as known in the art. In such embodiments, when a lost pet is found and the microchip is scanned, the system can be automatically configured to provide the veterinarian with instructions to access the system of the invention and/or automatically access the system of the invention. This will enable lost pets to be more quickly returned to their owners.

The system additionally allows for the quick change to registration information for all items registered to a particular user. This is particularly useful when an owner moves or changes phone numbers. Conventionally, when a user wishes to change any information, the particular system for each item must be separately accessed and the information changed. In contrast, the present invention allows a single system to be utilized to contain the information for any number of registered items.

Typically, the IC is permanently imbedded into or printed on the article itself. This is often accomplished by any conventional method, including, but not limited to, printing, embossing, etching, stamping, branding, or pressing a unique IC directly into the material of the accessory product, along with instructions to the Finder. The IC may also be separately provided, e.g., as a sticker, which can affixed to the item or article. This particular embodiment is particularly useful when the item is a mobile telephone, as most users of mobile telephones have their devices housed in a case, and if the indicia were imbedded into the mobile telephone, such information may be obscured by the case. By providing the indicia on the outside of the accessory product, it is more likely that the indicia will be seen by a Finder, necessarily increasing the likelihood that the item will be returned to the Owner.

It is also considered within the scope of the invention to provide both the item and the article with the same IC. This is particularly useful for the situation where the article is a removable case for the item.

When the item (or article is designed to be used with) is a mobile telephone, tablet computer or laptop computer, loss of the item will usually include loss of the device the Owner would have ordinarily used to access the system (Step 304) and/or receive the chat invite (Step 212). Therefore, when the item is such a mobile computing device, the system of the invention can be configured to request an alternative communication method for communications. For example, an alternative email address or mobile telephone number can be used or even a land-line telephone number. In the case where the alternative method is a land-line telephone number, the system can be configured to call the land-line telephone number and verbally provide instructions to the Owner as to how to engage the chat session (Steps 218, 352, and 430). The input of the alternate communication method can be input by the Owner at any time, e.g., when the IC is registered to the Owner and the Item, when the Item is reported lost or anytime therebetween.

When the item is a tool, e.g., a hand tool (such as a saw, screwdriver, hacksaw or hammer), a power tool (such as a drill, circular saw or compressor), or other tool-related product (such as a tape measure, tool belt or flashlight) the IC can be provided at the factory, just as with the mobile telephone cases, or be separately obtained. As many power tools are sold along with specifically designed tools and carrying cases, the same IC can be provided on the case. In another embodiment, the same IC can be provided on multiple stickers to be affixed to the item and the accessory product. That way, it is not necessary for the Owner to register a first IC for the tool itself and a second IC for the case, tool box, belt or bag. Moreover, it is considered within the scope of the invention to allow the same IC to be used on multiple tools. When this multiple use IC is utilized, the system of the invention may require the Owner to identify which tools and/or cases with which it is being used. When a tool or case is reported lost (Step 304) or found (Step 204), the system can be configured to prompt the user to identify the particular tool/case that is being identified as lost or found. The identification can either be free-form, thus providing an additional verification step, or by presenting the user with a list of registered items and asking the user to select the particular lost item. This multiple use IC may also enable a user to simultaneously report that a number of items are lost or found.

In a still further embodiment, a lost item can function as the device of the finder. Herein, the finder can use the device he just found to interact with the system of the invention. The following non-limiting example can occur when the lost item is a smart phone. When the Owner reports to the system of the invention that the phone has been lost, the system can send a code or other type of notification to the lost phone. The notification can be displayed immediately on the screen of the lost phone or when the phone is unlocked through the operating system of the phone. The notification can be a message asking the Finder to activate the system of the invention or otherwise provide information to the system, which information is relayed to the Owner. If the notification is displayed immediately, the system can manipulate the phone such that the notification is presented on the lock screen (as is commonly understood) of the device if the device is locked, or simply over whatever application or function is being displayed at the time.

The phone can also be provided with an icon or other functionality directly on the lock screen, such that if the phone is identified by a Finder prior to being reported lost by the Owner, the Finder can begin the interaction with the system without having to unlock the phone. The functionality can be provided, for example, as a function of the operating system itself, or be provided as a downloadable application.

Moreover, the apparatuses and methods of the disclosure can be implemented in hardware, firmware or as software or computer code that is stored on a non-transitory machine readable medium such as a CD ROM, a RAM, a floppy disk, a hard disk, or a magneto-optical disk or computer code downloaded over a network originally stored on a remote recording medium or a non-transitory machine readable medium and stored on a local non-transitory recording medium, so that the methods described herein are loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Under the broadest reasonable interpretation, the appended claims constitute statutory subject matter in compliance with 35 U.S.C. §101 and none of the elements consist of software per se.

As referred to herein, the term "computing device" should be broadly construed. It can include any type of mobile device, for example, a smart phone, feature phone, tablet computer, a cell phone, a pager, a personal digital assistant (PDA, e.g., with GPRS NIC), a mobile computer with a smart phone client, or the like. A computing device can also include any type of conventional computer, for example, a desktop computer or a laptop computer. A typical mobile device is a wireless data access-enabled device (e.g., an iPHONE^{®} smart phone, a BLACKBERRY^{®} smart phone, an Android smart phone, an iPAD™ device, or the like) that is capable of sending and receiving data in a wireless manner using protocols like the Internet Protocol, or IP, and the wireless application protocol, or WAP. This allows users to access information via wireless devices, such as smart phones, mobile phones, pagers, two-way radios, communicators, tablet computers and the like. Wireless data access is supported by many wireless networks, including, but not limited to, WiFi, Bluetooth, CDPD, CDMA, GSM, PDC, PHS, TDMA, FLEX, ReFLEX, iDEN, TETRA, DECT, DataTAC, Mobitex, EDGE and other 2G, 3G, 4G, LTE and xLTE technologies as well as other public and proprietary networks, and it operates with many handheld device operating systems, such as PalmOS, EPOC, Windows CE, FLEXOS, OS/9, JavaOS, iOS and Android. Typically, these devices use graphical displays and can access the Internet (or other communications network) on so-called mini- or micro-browsers, which are web browsers with small file sizes that can accommodate the reduced memory constraints of wireless networks. In a representative embodiment, the mobile device is a cellular telephone or smart phone that operates over GPRS (General Packet Radio Services), which is a data technology for GSM networks. In addition to a conventional voice communication, a given mobile device can communicate with another such device via many different types of message transfer techniques, including SMS (short message service), enhanced SMS (EMS), multi-media message (MMS), email WAP, paging, or other known or later-developed wireless data formats. Although many of the examples provided herein are implemented on a mobile device, the examples may similarly be implemented on any suitable computing device.

As referred to herein, an "interface" is generally a system by which users interact with a computing device. An interface can include an input for allowing users to manipulate a computing device, and can include an output for allowing the system to present information and/or data, indicate the effects of the user's manipulation, etc. An example of an interface on a computing device (e.g., a mobile device) includes a graphical user interface (GUI) that allows users to interact with programs in more ways than typing. A GUI typically can offer display objects, and visual indicators, as opposed to text-based interfaces, typed command labels or text navigation to represent information and actions available to a user. For example, an interface can be a display window or display object, which is selectable by a user of a mobile device for interaction. The display object can be displayed on a display screen of a mobile device and can be selected by and interacted with by a user using the interface. In an example, the display of the mobile device can be a touch screen, which can display the display icon. The user can depress the area of the display screen at which the display icon is displayed for selecting the display icon. In another example, the user can use any other suitable interface of a mobile device, such as a keypad, to select the display icon or display object. For example, the user can use a track ball or arrow keys for moving a cursor to highlight and select the display object.

Operating environments in which embodiments of the presently disclosed subject matter may be implemented are also well-known. In a representative embodiment, a computing device, such as a mobile device, is connectable (for example, via WAP) to a transmission functionality that varies depending on implementation. Thus, for example, where the operating environment is a wide area wireless network (e.g., a 2.5G network, a 3G network, a 4G network or any of the LTE variants), the transmission functionality comprises one or more components such as a mobile switching center (MSC) (an enhanced ISDIV switch that is responsible for call handling of mobile subscribers), a visitor location register (VLR) (an intelligent database that stores on a temporary basis data required to handle calls set up or received by mobile devices registered with the VLR), a home location register (HLR) (an intelligent database responsible for management of each subscriber's records), one or more base stations (which provide radio coverage with a cell), a base station controller (BSC) (a switch that acts as a local concentrator of traffic and provides local switching to effect handover between base stations), and a packet control unit (PCU) (a device that separates data traffic coming from a mobile device). The HLR also controls certain services associated with incoming calls. Of course, the presently disclosed subject matter may be implemented in other and next-generation mobile networks and devices as well. The mobile device is the physical equipment used by the end user, typically a subscriber to the wireless network. Typically, a mobile device is a 2.5G-compliant device or 3G-compliant device,4G-compliant device that includes a subscriber identity module (SIM), which is a smart card that carries subscriber-specific information, mobile equipment (e.g., radio and associated signal processing devices), a user interface (or a man-machine interface (MMI), and one or more interfaces to external devices (e.g., computers, PDAs, and the like). The mobile device may also include a memory or data store.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions

While the embodiments have been described in connection with the various embodiments of the various figures, it is to be understood that other similar embodiments may be used or modifications and additions may be made to the described embodiment for performing the same function without deviating therefrom. Therefore, the disclosed embodiments should not be limited to any single embodiment, but rather should be construed in breadth and scope in accordance with the appended claims.

The invention can also be described with the help of the following subjects:
1. A method for facilitating the return of a lost item, the method comprising:
   registering an identification code with an item and contact information of an owner of the item in a database, the database being maintained as part of a computing device;
   receiving information that the item has been lost by the owner and responding by sending chat invitation to a computing device of the owner;
   obtaining information that the item has been located by a finder and responding by sending a chat invitation to a computing device of the finder;
   operating a chat by relaying communications sent by the finder to the owner and from the owner to the finder.
2. The method of subject 1, wherein the operating comprises storing the communications.
3. The method of subject 2, wherein the operation further comprises analyzing the communications.
4. The method of subject 1, wherein the relaying is performed in secure environment.
5. The method of subject 1, wherein the relaying is performed solely through a web-based portal.
6. The method of subject 5, wherein the chat invitations comprise a URL permitting each of the owner and the finder to access the portal.
7. The method of subject 6, wherein the receiving and obtaining steps are conducted through a web-based portal.
8. The method of subject 1, wherein the receiving and obtaining steps are conducted through a web-based portal.
9. The method of subject 1, further comprising providing the finder with a reward.
10. The method of subject 1, further comprising sending the chat invitations by at least one selected from email, SMS, MMS, and an instant message system.
11. The method of subject 1, wherein the identification code comprises at least one of a series of alphanumeric characters and a machine readable code.
12. The method of subject 1, further comprising accepting a report from the owner that the item has been returned.
13. The method of subject 1, wherein:
   the registering step comprises setting a status field in the database to indicate that the item is not lost;
   after the receiving step, changing the status field to indicate that the item has been lost;
   after the obtaining step, changing the status field to indicate that the item has been found; and
   further comprising accepting a report from the owner that the item has been returned, and thereafter, changing the status field to indicate that the item is not lost.
14. A method for facilitating the return of a lost item comprising:
   obtaining an identification code;
   registering the code in a database of a system;
   affixing the identification code to the item;
   accessing the system for reporting loss of the item;
   accepting a chat invitation message from the system;
   participating in a chat session through the system with a finder of the item.
15. The method of subject 14, wherein the participating comprises utilizing a web-based portal as part of the system.
16. The method of subject 15, wherein the participating comprises utilizing the system via a computing device.
17. The method of subject 14, wherein the accepting step comprises accessing the chat session by following a link contained within the invitation.
18. The method of subject 14, wherein the invitation is sent by at least one of email, SMS, MMS, and an instant message service.
19. The method of subject 14, further comprising reporting to the system that the item has been returned.
20. A method for facilitating the return of a lost item to an owner comprising:
   locating a lost item having a tag thereon, the tag comprising an identification code;
   providing the identification code to a system;
   receiving a chat invitation message from the system; and
   participating in a chat session through the system.
21. The method of subject 20, wherein the providing step comprises accessing the system through a web-based portal.
22. The method of subject 20, wherein the chat invitation is received by at least of one email, SMS, MMS and an instant message service.
23. The method of subject 20, further comprising:
   returning the item to an owner; and
   receiving a reward.
24. The method if subject 20, further comprising receiving a communication from the system that the item has been retuned.

Further, the invention can also be described with the help of the following subjects:
1. A system for facilitating the return of an item, the system comprising:
   an item comprising an identification code, the identification code being associated with the item and information for communicating with a computing device of an owner of the item; and
   a managing computing device comprising at least one processor and memory and configured to:
      receive notification indicating that the item has been found; and
      in response to receipt of the information indicating that the item has been found by a finder:
   use the information for communicating to send the notification to a computing device of the owner; and
   manage communications between the computing device of the owner and a computing device of the finder for facilitating recovery of the item by the owner.
2. The system of subject 1, wherein the managing computing device comprises storage configured to record and store the communications between the computing device of the owner and a computing device of the finder.
3. The system of subject 2, wherein the managing computing device is configured to:
   analyze the communications between the computing device of the owner; and
   scan for abusive activity by the owner and finder in the communications by watching for predetermined keywords.
4. The system of subject 1, wherein the managing computing device is configured to send and receive information securely.
5. The system of subject 1, wherein the managing computing device is configured to manage the communications between the computing device of the owner and a computing device of the finder in private.
6. The system of subject 1, wherein the item is a case for an article.
7. The system of subject 6, wherein the article is selected from the group consisting of a mobile communication device and a tool.
8. The system of subject 6, wherein the article comprises the identification code.
9. The system of subject 1, wherein the identification code is permanently affixed to the item.
10. The system of subject 1, wherein the item is affixed to an article.
11. The system of subject 1, wherein the identification code comprises at least one of a series of alphanumeric characters and a machine readable code.
12. The system of subject 1, wherein the computing system is further configured to receive a communication from the computing device of the owner that indicates that the item has been recovered.
13. The system of subject 1, further comprising:
   the computing device of the owner, and
   the computing device of the finder,
   wherein each of the computing device of the owner and the computing device of the finder is configured to send and receive communications via the managing computing device.
14. A system for facilitating the return of an item, the system comprising:
   an item of an owner;
   an identification code associated with the item, the identification code being associated with the item and information for communicating with a computing device of an owner of the item; and
   the computing device of the owner configured to:
      receive notification indicating that the item has been found; and
      communicate with a computing device of a finder of the item via a managing computing device for facilitating recovery of the item by the owner.
      The system of subject 14, wherein the item is selected from the group consisting of a keytag, a mobile computing device, a tool and a case therefore.
15. The system of subject 14, wherein the identification code is permanently affixed to the item.
16. The system of subject 14, wherein the computing device of the owner is configured to send and receive secured communications with the computing device of the finder via the managing computing device.
17. A system for facilitating the return of an item, the system comprising:
   an item comprising an identification code, the identification code being associated with the item and information for communicating with a computing device of an owner of the item; and
   a computing device of a finder configured to:
      send the identification code to a managing computing device; and
      communicate with the computing device of the owner via the managing computing device for facilitating recovery of the item by the owner.
18. The system of subject 18, wherein the item is selected from the group consisting of a keytag, a mobile computing device, a tool, and a case for an article.
19. The system of subject 18, wherein the identification code is permanently affixed to the item.
20. The system of subject 18, wherein the computing device of the finder is configured to send and receive secured communications with the computing device of the owner via the managing computing device.

## Claims

1. A system for facilitating the return of an item, the system comprising:
an item comprising an identification code, the identification code being associated with the item and information for communicating with a computing device of an owner of the item; and
a managing computing device comprising at least one processor and
memory and configured to:
receive notification indicating that the item has been found; and
in response to receipt of the information indicating that the item has been found by a finder:
use the information for communicating to send the notification to a computing device of the owner; and
manage communications between the computing device of the owner and a computing device of the finder for facilitating recovery of the item by the owner.

2. The system of claim 1, wherein the managing computing device is configured to:
analyze the communications between the computing device of the owner; and
scan for abusive activity by the owner and finder in the communications by watching for predetermined keywords.

3. The system of claim 1 or 2, wherein the managing computing device is configured to send and receive information securely.

4. The system of any of the preceding claims, wherein the managing computing device is configured to manage the communications between the computing device of the owner and a computing device of the finder in private.

5. The system of any of the preceding claims, wherein the item is selected from the group consisting of one or more keys, a key fob, eye glasses, jewelry, a mobile communication device, tools, speakers, instruments, audio equipment, pet collars, luggage, handbags, watches, glasses, jewelry and cases therefor.

6. The system of any of the preceding claims, wherein the identification code comprises at least one of a series of alphanumeric characters and a machine readable code.

7. The system of any of the preceding claims, wherein the computing system is further configured to receive a communication from the computing device of the owner that indicates that the item has been recovered.

8. The system of any of the preceding claims, further comprising:
the computing device of the owner, and
the computing device of the finder,
wherein each of the computing device of the owner and the computing device of the finder is configured to send and receive communications via the managing computing device.

9. A method for facilitating the return of a lost item, the method comprising:
registering an identification code with an item and contact information of an owner of the item in a database, the database being maintained as part of a computing device;
receiving information that the item has been lost by the owner and responding by sending chat invitation to a computing device of the owner;
obtaining information that the item has been located by a finder and responding by sending a chat invitation to a computing device of the finder;
operating a chat by relaying communications sent by the finder to the owner and from the owner to the finder.

10. The method of claim 9, wherein the operating comprises storing the communications.

11. The method of claim 9 or 10, wherein the operation further comprises analyzing the communications.

12. The method of claims 9-11, wherein the relaying is performed in secure environment.

13. The method of claims 9-12, wherein:
the registering step comprises setting a status field in the database to indicate that the item is not lost;
after the receiving step, changing the status field to indicate that the item has been lost;
after the obtaining step, changing the status field to indicate that the item has been found; and
further comprising accepting a report from the owner that the item has been returned, and thereafter, changing the status field to indicate that the item is not lost.

14. The method of claims 9-13, further comprising providing instructions to a user to facilitate the registering and/or receiving steps.

15. The method of claims 9-14, further comprising providing instructions to a user to facilitate the obtaining and/or operating steps.
